# FASCICULE DE BREVET EUROPEEN

(11) **EP 3 942 157 B1**
(45) Date de publication et mention de la délivrance du brevet: **26.06.2024**
(21) Numéro de dépôt: 20726217.1
(22) Date de dépôt: 16.03.2020
(51) Int. Cl.: F01D 5/18

(54) **AUBE DE TURBOMACHINE EQUIPEE D'UN CIRCUIT DE REFROIDISSEMENT ET PROCEDE DE FABRICATION A CIRE PERDUE D'UNE TELLE AUBE**
TURBINENMOTORSCHAUFEL MIT KÜHLKREISLAUF UND WACHSAUSSCHMELZVERFAHREN ZUR HERSTELLUNG EINER SOLCHEN SCHAUFEL
TURBINE ENGINE VANE EQUIPPED WITH A COOLING CIRCUIT AND LOST-WAX METHOD FOR MANUFACTURING SUCH A VANE

(30) Priorité: 22.03.2019 FR 1903019
(43) Date de publication de la demande: 26.01.2022
(73) Titulaire: SAFRAN, 75015 Paris (FR); SAFRAN AIRCRAFT ENGINES, 75015 Paris (FR)
(72) Inventeur: CARIOU, Romain, Pierre, 77550 MOISSY-CRAMAYEL (FR); PELLETERAT DE BORDE, Myriam, 77550 MOISSY-CRAMAYEL (FR); SIMON, Vianney, 77550 MOISSY-CRAMAYEL (FR); ROLLINGER, Adrien, Bernard, Vincent, 77550 MOISSY-CRAMAYEL (FR)
(74) Mandataire: Gevers & Orès
(86) Numéro de dépôt international: PCT/FR2020/050564
(87) Numéro de publication internationale: WO 2020/193912

(56) Documents cités:
- EP-A2- 1 734 229
- EP-A2- 2 374 997
- FR-A1- 3 056 631
- US-A- 4 650 399
- US-A1- 2007 140 851

## Description

### Domaine de l'invention

La présente invention concerne le domaine des turbomachines et en particulier une aube de turbomachine équipée d'un circuit de refroidissement destiné à la refroidir. Elle vise également un procédé de fabrication à cire perdue à partir d'un ensemble de noyaux de fonderie.

### Arrière-plan technique

L'art antérieur comprend les documents FR-A1-3 056 631, US-A-4 650 399, EP-A2-2 374 997, US-A1-2007/140851, et EP-A2-1 734 229.

Les aubes de turbomachine, notamment les aubes de turbine haute pression sont soumises à des températures très élevées qui peuvent réduire leur durée de vie et dégrader les performances de la turbomachine. En effet, les turbines de turbomachine sont agencées en aval de la chambre de combustion de la turbomachine qui éjecte un flux gazeux chaud lequel est détendu par les turbines et permet de les entraîner en rotation pour le fonctionnement de la turbomachine. La turbine haute pression qui est placée directement à la sortie de la chambre de combustion subit les températures les plus élevées.

Afin de permettre aux aubes de turbine de supporter ces contraintes thermiques sévères, il est connu de prévoir un circuit de refroidissement dans lequel circule un air relativement plus froid qui est prélevé au niveau des compresseurs, ces derniers étant situés en amont de la chambre de combustion. Plus précisément, chaque aube de turbine comprend une pale avec une paroi intrados et une paroi extrados qui sont reliées en amont par un bord d'attaque et en aval par un bord de fuite.

Le circuit de refroidissement comprend plusieurs cavités à l'intérieur de la pale de l'aube dont certaines communiquent entre elles et qui sont alimentées par de l'air de refroidissement depuis le pied de l'aube, une partie de cet air de refroidissement débouchant dans des orifices de sortie qui sont placés au voisinage du bord de fuite. Ces orifices délivrent des jets d'air de refroidissement sur les parois de la pale.

Il est connu que le circuit de refroidissement comprenne plusieurs cloisons s'étendant radialement dans la pale de manière à former des cavités « montantes » et « descendantes » disposées successivement suivant le sens de circulation de l'air de refroidissement et qui communiquent entre elles par des passages courbes. Ces cavités et passages sont connus sous l'expression de circuit « trombone ». Les passages courbes sont formés respectivement par les extrémités libres des cloisons qui présentent chacune une courbure ou retournement de la cloison. Chaque cloison relie une première paroi à une deuxième paroi qui sont opposées transversalement dans la pale. Cela permet de balayer une grande surface à l'intérieur de la pale pour son refroidissement.

La pale peut comprendre d'autres cavités provenant d'autres circuits indépendants et qui sont agencées à proximité du circuit trombone par exemple du côté de la paroi intrados ou de la paroi extrados. Les passages courbes sont dans ce cas réduits afin de placer les différents circuits dans le maître-couple de la pale. En particulier, les circuits avec cavités sont réalisés généralement par des noyaux de fonderie indépendants qui sont exploités dans un procédé de fabrication de l'aube utilisant la technique de fonderie à cire perdue. Les noyaux peuvent être placés trop proches l'un par rapport à l'autre et ainsi créer des sous-épaisseurs de matière dans la matière des cloisons. Les sous-épaisseurs peuvent être dues à une déformation d'un noyau de fonderie lors de la cuisson du noyau, de l'injection de la cire autour des noyaux, de la cuisson de la carapace (généralement en matériaux réfractaire) enveloppant la cire et les noyaux ou de la coulée du métal en fusion dans la carapace, ou encore un mauvais maintien des noyaux.

Les sous-épaisseurs de matière sur la cloison sont fortement contraintes mécaniquement à cause de la présence de forts gradients thermiques entre l'intérieur et l'extérieur de la pale ce qui induit un écart de dilatation.

### Résumé de l'invention

L'objectif de la présente invention est de réduire les contraintes mécaniques localisées que subit la pale dû à l'agencement d'un circuit de refroidissement tout en évitant les modifications structurelles importantes de l'aube.

Nous parvenons à cet objectif conformément à l'invention grâce à un ensemble de fonderie pour la fabrication d'une aube de turbomachine comprenant une pale s'étendant suivant un axe radial et un premier circuit de refroidissement agencé à l'intérieur de la pale, le premier circuit de refroidissement comportant une première cavité et une deuxième cavité disposée en aval de la première cavité suivant un sens de circulation d'un fluide de refroidissement dans la pale, la première cavité et la deuxième cavité étant séparées au moins en partie par une première cloison radiale ayant une extrémité libre radialement interne qui délimite au moins en partie un premier passage de fluide de refroidissement reliant les première et deuxième cavités, l'ensemble comprenant un premier noyau allongé suivant une hauteur radiale et qui comporte une première aile destinée à former la première cavité et une deuxième aile destinée à former la deuxième cavité, les première et deuxième ailes étant à distance l'une de l'autre suivant un premier espace sensiblement constant suivant une majorité de leur hauteur radiale et étant reliées à une de leurs premières extrémités, le premier espace étant destiné à former la première cloison radiale de séparation entre la première et la deuxième cavités de la pale, le premier espace étant élargi au niveau des première extrémités des première et deuxième ailes en ayant une section transversale sensiblement en forme de trou de serrure, l'ensemble comprenant un deuxième noyau allongé suivant la hauteur radiale et un élément de liaison allongé qui est logé au moins en partie dans le premier espace élargi suivant une direction transversale perpendiculaire à la hauteur radiale et configuré pour maintenir en position le deuxième noyau par rapport au premier noyau.

Ainsi, cette solution permet d'atteindre l'objectif susmentionné. En particulier, une telle forme permet d'étaler les contraintes sur une plus grande surface à l'extrémité libre radialement interne de la première cloison ce qui permet d'augmenter la durée de vie de l'aube.

L'ensemble de fonderie comprend également l'une ou plusieurs des caractéristiques suivantes, prises seules ou en combinaison :
- le premier noyau comprend une troisième aile destinée à former la troisième cavité qui est reliée à sa deuxième extrémité à une deuxième extrémité de la première aile, la première aile et la troisième aile étant à distance l'une de l'autre suivant un deuxième espace sensiblement constant suivant une majorité de leur hauteur radiale.
- l'élément de liaison présente une section circulaire avec une complémentarité de forme avec le premier espace qui est élargi, l'élément de liaison étant bloqué radialement dans le premier espace qui est élargi.
- le deuxième espace est élargi au niveau des deuxièmes extrémités des première et troisième ailes en ayant une section transversale sensiblement en forme en trou de serrure.
- le premier noyau est configuré pour former le premier circuit de refroidissement.
- le deuxième noyau est configuré pour former un deuxième circuit de refroidissement, le deuxième circuit de refroidissement comprenant une cavité intrados disposée d'une part, de manière adjacente à une paroi intrados de la pale et d'autre part, entre la troisième cavité et la deuxième cavité suivant le sens de circulation du fluide de refroidissement dans la pale.
- les premier et deuxième noyaux comprennent un matériau céramique.
- la première aile est définie dans un plan médian PM1 qui est sensiblement orthogonal au plan médian PM2 dans lequel est définie la deuxième aile.
- la pale comprend une paroi intrados et une paroi extrados reliée en amont par un bord d'attaque et en aval par un bord de fuite.
- la première cloison s'étend suivant un axe transversal perpendiculaire à l'axe radial entre la paroi intrados et paroi extrados.
- le premier circuit de refroidissement comprend une troisième cavité disposée en amont de la première cavité suivant le sens de circulation du fluide de refroidissement, la troisième cavité et la première cavité étant séparées par une deuxième cloison radiale ayant une extrémité libre radialement externe et étant reliées par un deuxième passage de fluide de refroidissement qui est délimité au moins en partie par l'extrémité libre radialement externe.
- l'extrémité libre radialement externe comprend une section transversale générale sensiblement en forme de trou de serrure.
- la deuxième cloison s'étendant sensiblement transversalement entre la paroi intrados et la paroi extrados.
- l'extrémité libre radialement interne présente une section transversale circulaire ou semi-circulaire d'un rayon prédéterminé R2 dont la valeur est comprise entre 1.2 fois un rayon nominal R1 et 2 fois le rayon nominal R1, le rayon nominal R2 étant le rayon de l'extrémité libre radialement interne présentant un congé à section circulaire.

L'invention concerne également un procédé de fabrication d'une aube de turbomachine utilisant un ensemble de fonderie présentant l'une quelconque des caractéristiques susmentionnées.

Le procédé comprend en outre les étapes suivantes :
- assemblage des premier et deuxième noyaux de fonderie l'un par rapport à l'autre avec au moins un élément de liaison allongé inséré dans l'espacé élargi en forme de trou de serrure suivant une direction transversale à la hauteur radiale des première et deuxième aile, le deuxième noyau venant en butée contre l'élément de liaison,
- injection de cire de manière à enrober les premier et deuxième noyaux assemblés avec l'élément de liaison et à former un modèle,
- fabrication d'une carapace enveloppant le modèle,
- versement d'un métal en fusion à l'intérieur de la carapace de manière à former l'aube de turbomachine ;
- décochage de la carapace et des premier et deuxième noyaux de manière à libérer l'aube de turbomachine et à former les première et deuxième cavités du premier circuit de refroidissement dans la pale.

Suivant le procédé de fabrication, lors de l'étape de versement de métal en fusion, l'élément de liaison est noyé dans le métal en fusion de manière à former une seule pièce avec la pale et à former l'extrémité radialement interne de la première cloison radiale de section transversale sensiblement en forme de trou de serrure.

L'invention concerne en outre une turbine de turbomachine comprenant au moins une aube de turbomachine présentant les caractéristiques susmentionnées.

L'invention concerne par ailleurs une turbomachine comprenant au moins une turbine de turbomachine telle que précitée.

### Brève description des figures

L'invention sera mieux comprise, et d'autres buts, détails, caractéristiques et avantages de celle-ci apparaîtront plus clairement à la lecture de la description explicative détaillée qui va suivre, de modes de réalisation de l'invention donnés à titre d'exemples purement illustratifs et non limitatifs, en référence aux dessins schématiques annexés dans lesquels :
[Fig. 1] La figure 1 est une vue en coupe axiale et partielle d'un exemple de turbomachine à laquelle s'applique l'invention ;
[Fig. 2] La figure 2 représente schématiquement une coupe axiale d'une aube de turbomachine avec un circuit de refroidissement selon l'invention ;
[Fig. 3] La figure 3 est une vue en coupe radiale d'une pale d'une aube de turbomachine comprenant des circuits de refroidissement avec diverses cavités selon l'invention;
[Fig. 4] La figure 4 est une vue partielle et axiale d'un circuit de refroidissement d'une aube refroidie au niveau d'un passage courbe ou retournement selon l'invention ;
[Fig. 5] La figure 5 est une vue schématique d'un exemple de noyau de fonderie destiné à permettre la réalisation d'une aube de turbomachine par un procédé de fabrication utilisant la technique de cire fondue selon l'invention ; et
[Fig. 6] La figure 6 illustre de manière schématique l'agencement de noyaux de fonderie les uns aux rapport aux autres pour la fabrication d'une aube de turbomachine selon l'invention.

### Description détaillée de l'invention

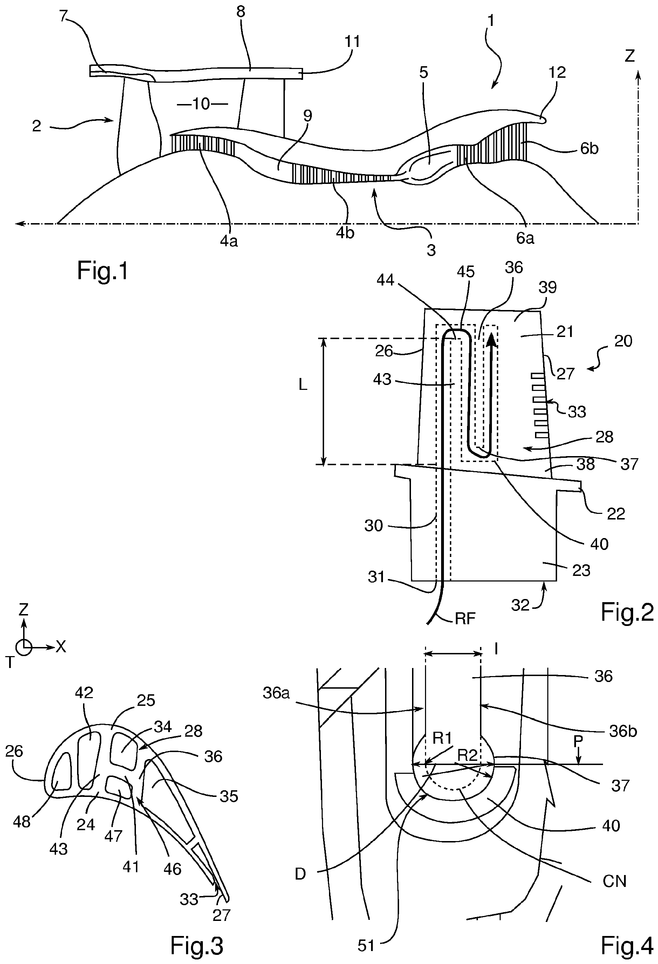

La figure 1 montre une vue en coupe axiale et partielle d'une turbomachine 1 d'axe longitudinal X à laquelle s'applique l'invention. La turbomachine représentée est une turbomachine double flux et double corps destiné à être montée sur un aéronef selon l'invention. Bien entendu, l'invention n'est pas limitée à ce type de turbomachine.

Cette turbomachine 1 à double flux comprend, de manière générale, une soufflante 2 montée en amont d'un générateur de gaz 3. Dans la présente invention, et de manière générale, les termes « amont » et « aval » sont définis par rapport à la circulation des gaz dans la turbomachine et ici suivant l'axe longitudinal X (et même de gauche à droite sur la figure 1). Les termes « axial » et « axialement » sont définis par rapport à l'axe longitudinal X. De même, les termes « radial », « interne » et « externe » sont définis par rapport à un axe radial Z perpendiculaire à l'axe longitudinal X et au regard de l'éloignement par rapport à l'axe longitudinal X.

Le générateur de gaz 3 comprend d'amont en aval, un compresseur basse pression 4a, un compresseur haute pression 4b, une chambre de combustion 5, une turbine haute pression 6a et une turbine basse pression 6b.

La soufflante 2, qui est entourée par un carter de soufflante 7 portée par une nacelle 8, divise l'air qui entre dans la turbomachine en un flux d'air primaire qui traverse le générateur de gaz 3 et en particulier dans une veine primaire 9, et en un flux d'air secondaire qui circule autour du générateur de gaz dans une veine secondaire 10.

Le flux d'air secondaire est éjecté par une tuyère secondaire 11 terminant la nacelle alors que le flux d'air primaire est éjecté à l'extérieur de la turbomachine via une tuyère d'éjection 12 située en aval du générateur de gaz 3.

La turbine haute pression 6a, comme la turbine basse pression 6b, comprend un ou plusieurs étages. Chaque étage comprend un aubage stator monté en amont d'un aubage mobile. L'aubage stator comprend une pluralité d'aubes de stator ou fixes, appelées distributeur, qui sont réparties circonférentiellement autour de l'axe longitudinal X. L'aubage mobile comprend une pluralité d'aubes mobiles qui sont réparties également circonférentiellement autour d'un disque centré sur l'axe longitudinal X. Les distributeurs dévient et accélèrent le flux aérodynamique en sortie de la chambre de combustion vers les aubes mobiles pour que celles-ci soient entrainées en rotation.

En référence aux figures 2 à 4, chaque aube de turbine (et ici une aube mobile 20 de turbine haute pression) comprend une pale 21 s'élevant radialement depuis une plateforme 22. Cette dernière est portée par un pied 23 qui est destiné à s'implanter dans une des rainures correspondantes du disque de turbine. Chaque pale 21 comprend une paroi intrados 24 et une paroi extrados 25 qui sont reliées en amont par un bord d'attaque 26 et en aval par un bord de fuite 27. Les parois intrados et extrados sont opposées suivant un axe transversal T qui est perpendiculaire aux axes longitudinal et radial.

L'aube 20 comprend un premier circuit de refroidissement 28 qui est agencé à l'intérieur de la pale et qui est destiné à refroidir les parois de la pale subissant les températures élevées du flux d'air primaire quittant la chambre de combustion 5 et la traversant. Le premier circuit de refroidissement 28 comprend plusieurs cavités qui communiquent entre elles de manière à former un conduit de type trombone. Ce dernier comprend plusieurs passages ou retournements (d'environ 180°) pour qu'un fluide de refroidissement, ici de l'air de refroidissement, balaie l'ensemble de la pale et de haut en bas suivant l'axe radial. Le refroidissement de la pale est alors optimisé.

Le pied 23 comprend un canal d'alimentation 30 qui comprend une entrée d'air de refroidissement 31 prélevé en amont de la chambre de combustion tel que sur le compresseur basse pression et qui débouche dans le conduit de type trombone. Le canal 30 débouche également sur une face radialement interne 32 du pied de l'aube qui comprend l'entrée d'air de refroidissement. Le premier circuit de refroidissement 28 comprend également des orifices de sortie 33 qui sont agencés au voisinage du bord de fuite 27 de la pale. Les orifices de sortie 33 sont orientés sensiblement suivant l'axe longitudinal X et sont alignés et répartis régulièrement sensiblement suivant l'axe radial. De la sorte, l'air de refroidissement RF qui circule depuis le pied de l'aube traverse les cavités à l'intérieur de la pale et débouche dans les orifices de sortie 33.

Comme cela est illustré en détail sur la figure 3, le premier circuit de refroidissement 28 comprend plusieurs cavités agencées successivement de l'amont vers l'aval de la pale. En particulier, une première cavité 34 et une deuxième cavité 35 s'étendent chacune suivant l'axe radial dans la pale. La deuxième cavité 35 est disposée en aval de la première cavité 34 suivant le sens de circulation de l'air de refroidissement (et de l'amont vers l'aval suivant l'axe longitudinal X). La première cavité 34 et la deuxième cavité 35 sont séparées, au moins en partie, par une première cloison radiale 36 qui a une extrémité libre radialement interne 37, ici semi-cylindrique. Cette dernière est située au niveau de l'extrémité de raccordement 38 de pied de l'aube (opposée radialement à l'extrémité libre 39 de la pale). L'extrémité libre 39 de la pale comprend par ailleurs, une paroi de fermeture (non représentée) qui permet de contenir l'air de refroidissement à l'intérieur de la pale pour son refroidissement. La première cloison 36 est raccordée à la paroi de fermeture à son extrémité radialement externe (opposée à son extrémité libre radialement interne 37).

En référence à la figure 4, la première cavité 34 et la deuxième cavité 35 sont reliées (et/ou communiquent entre elles) par un premier passage 40 de fluide de refroidissement qui est situé en partie inférieure de la cloison radiale 36, suivant l'axe radial, et qui est délimité au moins en partie par l'extrémité libre radialement interne 37.

La première cloison radiale 36 relie une première paroi à une deuxième paroi opposées sensiblement suivant l'axe transversal. Dans l'exemple représenté, la première paroi est en contact avec l'environnement extérieur de la pale subissant les flux gazeux chauds et est formée par la paroi extrados 25. La deuxième paroi est quant à elle formée par une paroi interne 41 qui s'étend d'une part, suivant l'axe radial et d'autre part, suivant une direction sensiblement parallèle à la corde de l'aube (ou sensiblement suivant l'axe longitudinal X).

Alternativement, la première paroi est formée par la paroi intrados puisque celle-ci subit également les flux gazeux chauds. Dans ce cas, la première cloison radiale 36 s'étend transversalement entre la paroi intrados 24 et la paroi interne 41 auxquelles celle-ci est reliée avec des zones de raccordement respectivement. Suivant encore une autre alternative, la première cloison 36 est reliée à la paroi intrados 24 et à la paroi extrados 25 entre lesquelles celle-ci s'étend transversalement.

Comme nous pouvons le voir sur la figure 4 en détail, la première cloison radiale 36 présente une épaisseur ou une largeur I sensiblement constante sur la majeure partie de sa longueur radiale L. L'extrémité libre radialement interne 37 est élargie (ou comprend un élargissement) en ayant une section transversale générale sensiblement en forme de trou de serrure. L'élargissement est sensiblement constant suivant l'axe transversal (et entre la paroi intrados 24 et la paroi extrados 25). En particulier, la section transversale est circulaire ou semi-circulaire avec un rayon prédéterminé R2. L'axe du rayon prédéterminé est perpendiculaire à l'axe radial. L'extrémité libre radialement interne comprend une surface externe cylindrique 51 et qui relie deux flancs 36a, 36b opposés de la première cloison radiale 36 suivant la corde de la pale (ou suivant l'axe longitudinal). Une telle configuration forme une surépaisseur locale de la cloison afin de pouvoir agrandir la valeur d'un congé CN de section circulaire avec un rayon nominal R1 (représenté en traits pointillés) d'une extrémité libre d'une cloison classique de l'art antérieur. Par ailleurs, la forme du trou de serrure est définie par le fait que le diamètre D de l'extrémité libre définie dans un plan P passant par l'axe de celui-ci et perpendiculaire à l'axe radial est supérieur à la largeur l de la cloison 36.

Dans le présent exemple, la valeur du rayon prédéterminé R2 est supérieur au rayon nominal R1. En particulier, le rayon prédéterminé est compris entre 1.2*R1 et 2*R1. Dans l'exemple de réalisation de la figure 4, le rayon prédéterminé R2 est égale à 1.5 fois le rayon R1.

Le premier circuit de refroidissement 28 comprend également une troisième cavité 42 qui s'étend radialement à l'intérieur de la pale. La troisième cavité est disposée en amont de la première cavité dans le sens de circulation de l'air de refroidissement. La troisième cavité est séparée au moins en partie de la première cavité par une deuxième cloison radiale 43 qui comprend une extrémité libre radialement externe 44. La troisième cavité et la première cavité sont reliées par un deuxième passage 45 de fluide de refroidissement qui est délimité au moins en partie par l'extrémité libre radialement externe. La paroi de fermeture délimite également le deuxième passage 45.

La troisième cavité 42, la première cavité 34 et la deuxième cavité 35 disposées successivement suivant le sens de circulation de fluide de refroidissement forment le conduit de type trombone.

La pale comprend un deuxième circuit de refroidissement 46 qui permet de refroidir également la pale. Le deuxième circuit de refroidissement comprend une cavité intrados 47 qui s'étend radialement à l'intérieur de l'aube. La cavité intrados 47 sert à refroidir spécifiquement la paroi intrados et la partie supérieure de la pale suivant l'axe radial. L'air qui est injecté dans cette cavité peut sortir de la pale par les orifices de sortie ou par d'autres orifices qui serait situés sur la paroi intrados par exemple. Comme nous pouvons le voir sur la figure 3, la cavité intrados 47 s'étend transversalement entre la paroi interne 41 et la paroi intrados 24. Celle-ci s'étend également longitudinalement suivant le sens de circulation du flux d'air entre la troisième cavité 42 et la deuxième cavité 35. En d'autres termes, la deuxième cavité 35 couvre transversalement la première cavité 34 et la cavité intrados 47. Sa longueur est sensiblement identique à celle de la première cavité dans le sens de circulation de l'air de refroidissement (sens axial).

Le deuxième circuit de refroidissement est indépendant du premier circuit de refroidissement.

En amont de la troisième cavité 42 est agencée une cavité amont 48 qui s'étend radialement le long du bord d'attaque 26.

La première et la deuxième cloisons 36, 43 sont formées d'une seule pièce avec l'aube.

Avantageusement, mais non limitativement l'aube est réalisée dans un alliage métallique et suivant un procédé de fabrication utilisant la technique de fonderie à cire perdue ou modèle perdu. L'alliage métallique est de préférence à base de Nickel et peut être monocristallin.

Ce procédé comprend une première étape de fabrication d'un ou de plusieurs noyaux de fonderie. Dans le présent exemple, l'aube comprenant une pale pourvue de plusieurs cavités de circulation de fluide de refroidissement est réalisée à partir de plusieurs noyaux de fonderie formant un ensemble de fonderie. Ce dernier comprend en particulier un premier noyau 50 et un deuxième noyau 51 qui sont réalisés dans un matériau réfractaire tel qu'un matériau céramique.

Le premier noyau 50 présente la forme complémentaire du conduit de type trombone dans la pale.

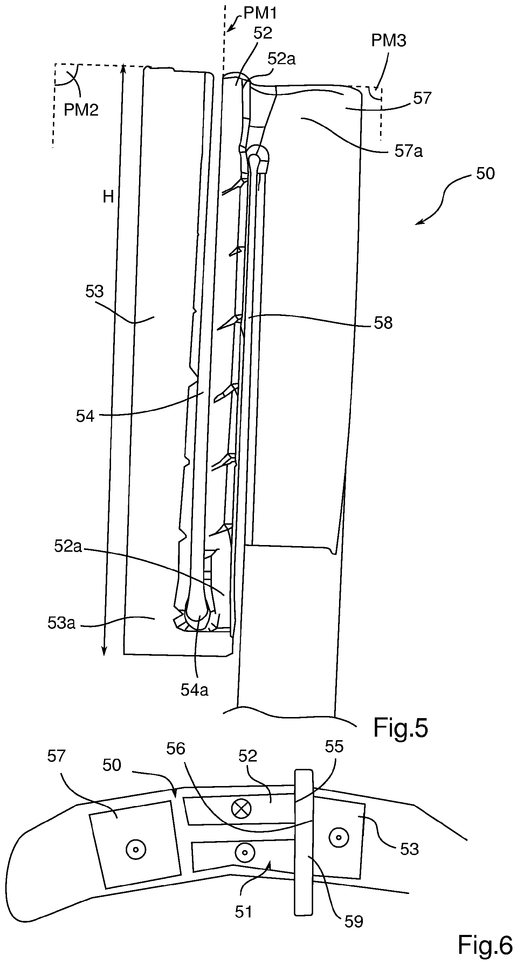

En référence aux figures 5 et 6, le premier noyau 50 est allongé suivant une hauteur radiale (verticale dans le plan de la figure 5). Le premier noyau comporte une première aile 52 destinée à former la première cavité 35 de circulation de fluide de refroidissement dans la pale et une deuxième aile 53 destinée à former la deuxième cavité 35 de circulation de fluide de refroidissement dans la pale. La première aile est définie sensiblement dans un plan médian PM1 orthogonal au plan médian PM2 de la deuxième aile 53. La première aile 52 et la deuxième aile 53 sont à distance l'une de l'autre suivant un premier espace 54 sensiblement constant suivant une majorité de la hauteur radiale des première et deuxième ailes. La première aile et la deuxième aile sont reliées à leurs premières extrémités respective 52a, 53a. Ces dernières sont destinées à former le premier passage 40 dans la pale une fois réalisée.

L'espace 54 est destiné à former la première cloison radiale 36 de séparation entre la première et la deuxième cavités. L'espace est délimité par un côté 55 de la première aile et une portion de côté 56 de la deuxième aile. Comme nous pouvons le voir sur la figure 5, l'espace 54 est élargi (formant un espace élargi 54a ou élargissement) au niveau de la jonction des première extrémités des première et deuxième ailes en ayant une section transversale sensiblement en forme de trou de serrure. La section transversale de l'espace élargi est circulaire ou semi-circulaire avec le rayon prédéterminée R2. Il s'agit de la forme en négatif de l'extrémité libre radialement interne 37 en forme de trou de serrure de la première cloison radiale 36.

Le premier noyau 50 comprend également une troisième aile 57 qui est allongée suivant une hauteur radiale et est destinée à former la troisième cavité 42 de la pale. La troisième aile est définie dans un plan médian PM3 sensiblement orthogonal au plan médian PM1. Les plan médians PM1 et PM2 sont sensiblement parallèles. La troisième aile 57 est également reliée à la première aile au niveau de leurs deuxièmes extrémités. La deuxième extrémité 53b de la première aile est opposée radialement à sa première extrémité 53a. En particulier, la deuxième aile 53 s'étend d'un côté de la première aile et la troisième aile 57 s'étend de l'autre côté de la première aile. De même, un deuxième espace 58 est prévu entre la première et la troisième aile, de manière à former la deuxième cloison 43. Le deuxième espace peut être également élargi au niveau de la jonction des deuxièmes extrémités avec une section transversale sensiblement en forme de trou de serrure. Les deuxièmes extrémités sont destinées à former le deuxième passage communiquant fluidiquement avec la première et la troisième cavité de circulation de fluide de refroidissement dans la pale.

La troisième aile se prolonge également suivant la hauteur radiale de manière à former le canal 30 s'étendant dans le pied de l'aube.

Le premier noyau 50 et le deuxième noyau 51 sont assemblés ensemble par au moins un élément de liaison 59 pour les maintenir en position l'un par rapport à l'autre. L'élément de liaison 59 est agencé dans l'espace élargi du premier espace avec une complémentarité de forme suivant une direction perpendiculaire à la hauteur radiale. Avantageusement, il existe un jeu entre les noyaux et l'élément de liaison 59 de sorte à ne pas contraindre trop fortement ceux-ci. En particulier, l'élément de liaison présente une section axiale circulaire.

L'espace élargi forme alors un logement pour l'élément de liaison 59 qui est bloquée radialement en position. L'élément de liaison 59 peut être inséré du côté intrados ou du côté extrados de l'ensemble de fonderie assemblé.

De la sorte, comme nous pouvons le voir sur la représentation schématique de l'agencement des noyaux entre eux sur la figure 6, l'élément de liaison 59 allongé s'étend entre la première aile 52 et la deuxième aile 53 axialement mais aussi entre le premier noyau 51 et la deuxième aile 53 axialement. Le deuxième noyau 51 vient en butée contre l'élément de liaison pour maintenir sa position, et notamment lors des différentes étapes du procédé. En particulier, si le noyau 51 se déforme et tend à se rapprocher trop près du noyau 53, notamment de l'aile 53, l'élément de liaison servira de butée. Dans cet exemple, l'élément de liaison comprend un picot ou un pion réalisé dans un matériau métallique ou un alliage métallique. Avantageusement mais non limitativement, le picot comprend un platine (Pt). D'autres éléments de liaison peuvent bien entendu être installés à d'autres endroits pour la maintien des noyaux les uns par rapport aux autres, tels que dans le deuxième espace élargi. Nous comprenons que l'élément de liaison (ici le picot) comprend une section constante de sorte que la distance entre le noyau 51 et la deuxième aile 53, et la distance entre la première aile 52 et la deuxième aile 53, au niveau de l'espace élargi soit supérieur ou égale au diamètre de l'élément de liaison. Avantageusement, les distances précitées sont sensiblement identiques

Suivant une autre étape du procédé, de la cire ou un matériau équivalent est injectée autour des noyaux qui sont disposés préalablement, de manière avantageuse, mais non limitativement, dans une presse. Une fois que la cire est refroidie, nous obtenons un modèle comprenant les noyaux noyés dans la cire. Les noyaux ont maintenu leur position grâce à l'élément de liaison 59.

Le modèle est disposé sur une colonne avec d'autres modèles similaires de manière à former une grappe.

Le procédé comprend en outre la réalisation d'une carapace dans un matériau réfractaire autour de la grappe et qui fait office de moule. Le matériau réfractaire est dans le présent exemple une céramique. La carapace est réalisée en immergeant la grappe plusieurs fois dans une barbotine en céramique.

Suivant une autre étape du procédé, du métal en fusion est versé ou coulé à l'intérieur de la carapace de manière à combler les cavités obtenus lors du retrait de la cire dans les modèles et destinés à former les pièces métalliques, ici les aubes de turbine. En effet, préalablement à cette étape de versement de métal, il est réalisée une étape de retrait de la cire.

L'élément de liaison 59 est « dissout » ou noyé dans le matériau formant l'aube de turbomachine. L'élément de liaison 59 forme une seule pièce avec l'aube. L'élément de liaison 59 permet également de garantir l'épaisseur de matériau au niveau de l'extrémité libre radialement interne 37 de la cloison radiale 36.

Lorsque la carapace est refroidie et solidifiée, un étape de décochage permet de détruire la carapace et les noyaux dans les pièces métalliques (aube) de manière à faire apparaître l'aube finale et les cavités de circulation de fluide de refroidissement.

## Revendications

1. Ensemble de fonderie pour la fabrication d'une aube (20) de turbomachine comprenant une pale (21) s'étendant suivant un axe radial et un premier circuit de refroidissement (28) agencés à l'intérieur de la pale, le premier circuit de refroidissement (28) comportant une première cavité (34) et une deuxième cavité (35) disposée en aval de la première cavité (34) suivant un sens de circulation d'un fluide de refroidissement dans la pale, la première cavité et la deuxième cavité étant séparées au moins en partie par une première cloison radiale (36) ayant une extrémité libre radialement interne (37) qui délimite au moins en partie un premier passage (40) de fluide de refroidissement reliant les première et deuxième cavités, l'ensemble comprenant un premier noyau (50) allongé suivant une hauteur radiale et qui comporte une première aile (52) destinée à former la première cavité (34) et une deuxième aile (53) destinée à former la deuxième cavité (35), les première et deuxième ailes (52, 53) étant à distance l'une de l'autre suivant un premier espace (54) sensiblement constant suivant une majorité de leur hauteur radiale et étant reliées à une de leurs premières extrémités (52a, 53a), le premier espace (54) étant destiné à former la première cloison radiale (36) de séparation entre la première et la deuxième cavités de la pale (21), le premier espace (54) étant élargi au niveau des première extrémités (52a, 53a) des première et deuxième ailes (52, 53) en ayant une section transversale sensiblement en forme de trou de serrure, **caractérisé en ce que** l'ensemble comprend un deuxième noyau (51) allongé suivant la hauteur radiale et un élément de liaison (59) allongé qui est logé au moins en partie dans le premier espace (54) élargi suivant une direction transversale perpendiculaire à la hauteur radiale et configuré pour maintenir en position le deuxième noyau (51) par rapport au premier noyau (50).

2. Ensemble selon la revendication précédente, **caractérisé en ce que** le premier noyau (50) comprend une troisième aile (57) destinée à former une troisième cavité (42) de la pale et qui est reliée à sa deuxième extrémité (57a) à une deuxième extrémité de la première aile (52a), la première aile (52) et la troisième aile (57) étant à distance l'une de l'autre suivant un deuxième espace (58) sensiblement constant suivant une majorité de leur hauteur radiale.

3. Ensemble selon l'une des revendications précédentes, **caractérisé en ce que** l'élément de liaison (59) présente une section circulaire avec une complémentarité de forme avec le premier espace qui est élargi (54a), l'élément de liaison (59) étant bloqué radialement dans le premier espace (54) qui est élargi.

4. Ensemble selon l'une des revendications 2 et 3, **caractérisé en ce que** le deuxième espace (58) est élargi au niveau des deuxièmes extrémités des première et troisième ailes en ayant une section transversale sensiblement en forme en trou de serrure.

5. Ensemble selon l'une quelconque des revendications précédentes, **caractérisé en ce que** le premier noyau (50) est configuré pour former le premier circuit de refroidissement (28).

6. Ensemble selon l'une quelconque des revendications précédentes, **caractérisé en ce que** le deuxième noyau (51) est configuré pour former un deuxième circuit de refroidissement (46) destiné à être agencé dans la pale (21), le deuxième circuit de refroidissement (46) comportant une cavité intrados (47) disposée d'une part, de manière adjacente à une paroi intrados de la pale (21) et d'autre part, entre la troisième cavité (42) et la deuxième cavité (35) suivant le sens de circulation du fluide de refroidissement dans la pale (21).

7. Ensemble selon l'une quelconque des revendications 5 et 6, **caractérisé en ce que** les premier et deuxième noyaux (50, 51) comprennent un matériau céramique.

8. Ensemble selon l'une quelconque des revendications précédentes, **caractérisé en ce que** la première aile (52) est définie dans un plan médian PM1 qui est sensiblement orthogonal au plan médian PM2 dans lequel est définie la deuxième aile (53).

9. Procédé de fabrication à cire perdue d'une aube de turbomachine, utilisant un ensemble de fonderie selon l'une quelconque des revendications 1 à 8.

10. Procédé selon la revendication précédente, **caractérisé en ce qu'**il comprend les étapes suivantes :
- assemblage des premier et deuxième noyaux (50, 51) de fonderie l'un par rapport à l'autre avec au moins un élément de liaison (59) allongé inséré dans l'espacé élargi (54a) en forme de trou de serrure suivant une direction transversale à la hauteur radiale des première et deuxième ailes, le deuxième noyau (51) venant en butée contre l'élément de liaison (59),
- injection de cire de manière à enrober les premier et deuxième noyaux assemblés avec l'élément de liaison (59) et à former un modèle,
- fabrication d'une carapace enveloppant le modèle,
- versement d'un métal en fusion à l'intérieur de la carapace de manière à former l'aube de turbomachine, et
- décochage de la carapace et des premier et deuxième noyaux de manière à libérer l'aube de turbomachine et à former les première et deuxième cavités du premier circuit de refroidissement (28) dans la pale (21).

11. Procédé selon la revendication précédente, **caractérisé en ce que** lors de l'étape de versement de métal en fusion, l'élément de liaison (59) est noyé dans le métal en fusion de manière à former une seule pièce avec la pale et à former l'extrémité libre radialement interne (37) de la première cloison radiale (36) de section transversale sensiblement en forme de trou de serrure.

## Patentansprüche

1. Gießereianordnung zur Herstellung einer Turbotriebwerksschaufel (20), die ein Blatt (21), das sich entlang einer radialen Achse erstreckt, und einen ersten Kühlkreislauf (28) umfasst, der im Inneren des Blatts eingerichtet ist, wobei der erste Kühlkreislauf (28) einen ersten Hohlraum (34) und einen zweiten Hohlraum (35) umfasst, der entlang einer Zirkulationsrichtung eines Kühlfluids in dem Blatt stromabwärts des ersten Hohlraums (34) angeordnet ist, wobei der erste Hohlraum und der zweite Hohlraum mindestens zum Teil durch eine erste radiale Trennwand (36) getrennt sind, die ein radial inneres freies Ende (37) aufweist, das mindestens zum Teil einen ersten Kühlfluiddurchgang (40), der den ersten und den zweiten Hohlraum verknüpft, begrenzt, wobei die Anordnung einen ersten Kern (50) umfasst, der entlang einer radialen Höhe länglich ist und der einen ersten Flügel (52), der dazu bestimmt ist, den ersten Hohlraum (34) zu bilden, und einen zweiten Flügel (53) umfasst, der dazu bestimmt ist, den zweiten Hohlraum (35) zu bilden, wobei sich der erste und der zweite Flügel (52, 53) entlang eines ersten Raums (54), der entlang eines Großteils ihrer radialen Höhe im Wesentlichen konstant ist, in Abstand voneinander befinden und an einem ihrer ersten Enden (52a, 53a) verknüpft sind, wobei der erste Raum (54) dazu bestimmt ist, die erste radiale Trennwand (36) zur Trennung zwischen dem ersten und dem zweiten Hohlraum des Blatts (21) zu bilden, wobei der erste Raum (54) im Bereich der ersten Enden (52a, 53a) des ersten und des zweiten Flügels (52, 53) aufgeweitet ist, wobei er einen im Wesentlichen schlüssellochförmigen Querschnitt aufweist, **dadurch gekennzeichnet, dass** die Anordnung einen zweiten Kern (51), der entlang der radialen Höhe länglich ist, und ein längliches Verknüpfungsglied (59) umfasst, das mindestens zum Teil in dem ersten aufgeweiteten Raum (54) entlang einer Querrichtung senkrecht zur radialen Höhe aufgenommen und so konfiguriert ist, dass es den zweiten Kern (51) in Bezug auf den ersten Kern (50) in Position hält.

2. Anordnung nach dem vorstehenden Anspruch, **dadurch gekennzeichnet, dass** der erste Kern (50) einen dritten Flügel (57) umfasst, der dazu bestimmt ist, einen dritten Hohlraum (42) des Blatts zu bilden, und der an seinem zweiten Ende (57a) mit einem zweiten Ende des ersten Flügels (52a) verknüpft ist, wobei sich der erste Flügel (52) und der dritte Flügel (57) entlang eines zweiten Raums (58), der entlang eines Großteils ihrer radialen Höhe im Wesentlichen konstant ist, in Abstand voneinander befinden.

3. Anordnung nach einem der vorstehenden Ansprüche, **dadurch gekennzeichnet, dass** das Verknüpfungsglied (59) einen kreisförmigen Querschnitt mit einer Formschlüssigkeit mit dem ersten Raum, der aufgeweitet ist (54a), aufweist, wobei das Verknüpfungsglied (59) radial in dem ersten Raum (54), der aufgeweitet ist, gesperrt ist.

4. Anordnung nach einem der Ansprüche 2 und 3, **dadurch gekennzeichnet, dass** der zweite Raum (58) im Bereich der zweiten Enden des ersten und des dritten Flügels aufgeweitet ist, wobei er einen im Wesentlichen schlüssellochförmigen Querschnitt aufweist.

5. Anordnung nach einem der vorstehenden Ansprüche, **dadurch gekennzeichnet, dass** der erste Kern (50) so konfiguriert ist, dass er den ersten Kühlkreislauf (28) bildet.

6. Anordnung nach einem der vorstehenden Ansprüche, **dadurch gekennzeichnet, dass** der zweite Kern (51) so konfiguriert ist, dass er einen zweiten Kühlkreislauf (46) bildet, der dazu bestimmt ist, in dem Blatt (21) eingerichtet zu werden, wobei der zweite Kühlkreislauf (46) einen windzugewandten Hohlraum (47) umfasst, der einerseits an eine windzugewandte Wand des Blatts (21) angrenzend und andererseits entlang der Zirkulationsrichtung des Kühlfluids in dem Blatt (21) zwischen dem dritten Hohlraum (42) und dem zweiten Hohlraum (35) angeordnet ist.

7. Anordnung nach einem der Ansprüche 5 und 6, **dadurch gekennzeichnet, dass** der erste und der zweite Kern (50, 51) ein keramisches Material umfassen.

8. Anordnung nach einem der vorstehenden Ansprüche, **dadurch gekennzeichnet, dass** der erste Flügel (52) in einer Mittelebene PM1 definiert ist, die im Wesentlichen orthogonal zur Mittelebene PM2 ist, in der der zweite Flügel (53) definiert ist.

9. Wachsausschmelzverfahren zur Herstellung einer Turbotriebwerksschaufel, das eine Gießereianordnung nach einem der Ansprüche 1 bis 8 verwendet.

10. Verfahren nach dem vorstehenden Anspruch, **dadurch gekennzeichnet, dass** es die folgenden Schritte umfasst:
- Verbinden des ersten und des zweiten Gießereikerns (50, 51) in Bezug zueinander mit mindestens einem länglichen Verknüpfungsglied (59), das in den schlüssellochförmigen aufgeweiteten Raum (54a) entlang einer Querrichtung zur radialen Höhe des ersten und des zweiten Flügels eingesetzt wird, wobei der zweite Kern (51) am Verknüpfungsglied (59) in Anschlag geht,
- Einspritzen von Wachs, um den ersten und den zweiten Kern, die mit dem Verknüpfungsglied (59) verbunden sind, einzuhüllen und ein Modell zu bilden,
- Herstellen einer Schale, die das Modell umhüllt,
- Gießen einer Metallschmelze in das Innere der Schale, um die Turbotriebwerksschaufel zu bilden, und
- Entfernen der Schale und des ersten und des zweiten Kerns, um die Turbotriebwerksschaufel freizulegen und den ersten und den zweiten Hohlraum des ersten Kühlkreislaufs (28) in dem Blatt (21) zu bilden.

11. Verfahren nach dem vorstehenden Anspruch, **dadurch gekennzeichnet, dass** beim Schritt des Gießens von Metallschmelze das Verknüpfungsglied (59) in die Metallschmelze eingebettet wird, um ein einziges Teil mit dem Blatt zu bilden und um das radial innere freie Ende (37) der ersten radialen Trennwand (36) mit im Wesentlichen schlüssellochförmigem Querschnitt zu bilden.

## Claims

1. A metal casting assembly for the manufacture of a turbine engine vane (20) comprising a blade (21) extending along a radial axis and a first cooling circuit (28) arranged inside the blade, the first cooling circuit (28) comprising a first cavity (34) and a second cavity (35) disposed downstream of the first cavity (34) in a direction of circulation of a coolant in the blade, the first cavity and the second cavity being at least partly separated by a first radial partition (36) having a radially internal free end (37) which at least partly demarcates a first coolant passage (40) connecting the first and second cavities, the assembly comprising a first core (50) elongated along a radial height and which comprises a first wing (52) intended to form the first cavity (34) and a second wing (53) intended to form the second cavity (35), the first and second wings (52, 53) being spaced apart along a substantially constant first space (54) along a majority of their radial height and being connected at one of their first ends (52a, 53a), the first space (54) being intended to form the first radial separating partition (36) between the first and second cavities of the blade (21), the first space (54) being enlarged at the first ends (52a, 53a) of the first and second wings (52, 53), by having a transverse section substantially in the form of a keyhole, **characterised in that** the assembly comprises a second core (51) elongated along the radial height and an elongated connecting element (59) which is at least partly accommodated in the first space (54) enlarged in a transverse direction perpendicular to the radial height and configured to hold the second core (51) in position with respect to the first core (50).

2. The assembly according to the preceding claim, **characterised in that** the first core (50) comprises a third wing (57) intended to form a third cavity (42) of the blade and which is connected at its second end (57a) to a second end of the first wing (52a), the first wing (52) and the third wing (57) being spaced apart along a second space (58) substantially constant along a majority of their radial height.

3. The assembly according to one of the preceding claims, **characterised in that** the connecting element (59) has a circular cross-section with a form-fit to the first space which is enlarged (54a), the connecting element (59) being radially locked in the first space (54) which is enlarged.

4. The assembly according to one of the claims 2 and 3, **characterised in that** the second space (58) is enlarged at the second ends of the first and third wings by having a transverse section substantially in the form of a keyhole.

5. The assembly according to any one of the preceding claims, **characterised in that** the first core (50) is configured to form the first cooling circuit (28).

6. The assembly according to any one of the preceding claims, **characterised in that** the second core (51) is configured to form a second cooling circuit (46) intended to be arranged in the blade (21), the second cooling circuit (46) comprising a pressure cavity (47) disposed on the one hand adjacent to a pressure wall of the blade (21) and on the other hand between the third cavity (42) and the second cavity (35) along the direction of circulation of the coolant in the blade (21).

7. The assembly according to any one of claims 5 and 6, **characterised in that** the first and second cores (50, 51) comprise a ceramic material.

8. The assembly according to any one of the preceding claims, **characterised in that** the first wing (52) is defined in a median plane PM1 which is substantially orthogonal to the median plane PM2 in which the second wing (53) is defined.

9. A lost-wax method for manufacturing a turbine engine vane, using a metal casting assembly according to any one of the claims 1 to 8.

10. The method according to the preceding claim, **characterised in that** it comprises the following steps:
- assembling the first and second metal casting cores (50, 51) with respect to each other with at least one elongated connecting element (59) inserted in the enlarged space (54a) in the form of a keyhole in a direction transverse to the radial height of the first and second wings, the second core (51) abutting against the connecting element (59),
- injecting wax so as to encapsulate the first and second cores assembled with the connecting element (59) and form a pattern,
- manufacturing a shell enveloping the pattern,
- pouring molten metal into the shell so as to form the turbine engine vane, and
- shaking out the shell and the first and second cores so as to release the turbine engine vane and form the first and second cavities of the first cooling circuit (28) in the blade (21).

11. The method according to the preceding claim, **characterised in that** in the step of pouring molten metal, the connecting element (59) is embedded in the molten metal so as to form a single piece with the blade and to form the radially internal free end (37) of the first radial partition (36) of transverse section substantially in the form of a keyhole.
